# EUROPEAN PATENT SPECIFICATION

(11) **EP 4 226 071 B1**
(45) Date of publication and mention of the grant of the patent: **17.09.2025**
(21) Application number: 21794239.0
(22) Date of filing: 04.10.2021
(51) Int. Cl.: F16L 55/28, E21B 23/00, F16L 55/32, F16L 55/44, F16L 101/30

(54) **DEVICE TO BE DISPLACED THROUGH A PIPE**
VORRICHTUNG, DIE DURCH EIN ROHR VERSCHOBEN WIRD.
DISPOSITIF DESTINÉ À ÊTRE DÉPLACÉ À TRAVERS UN TUYAU

(30) Priority: 05.10.2020 NL 2026616
(43) Date of publication of application: 16.08.2023
(73) Proprietor: KWR Water B.V., 3433 PE Nieuwegein (NL)
(72) Inventor: VOSS, Kevin Hendrik Jozef, 3433 PE NIEUWEGEIN (NL); BOLTE, Jan Hendrik, 3433 PE NIEUWEGEIN (NL); FOLKERTSMA, Gerrit Adriaan, 3433 PE NIEUWEGEIN (NL); KEVERKAMP, Chiel Gerhardus Hermanus, 3433 PE NIEUWEGEIN (NL); KROES, Hans, 3433 PE NIEUWEGEIN (NL); JONKER, Ewout Rik, 3433 PE NIEUWEGEIN (NL); VAN THIENEN, Peter, 3433 PE NIEUWEGEIN (NL)
(74) Representative: Algemeen Octrooi- en Merkenbureau B.V.
(86) International application number: PCT/NL2021/050600
(87) International publication number: WO 2022/075839

(56) References cited:
- DE-A1- 102004 029 631
- DE-A1- 102005 035 826
- DE-A1- 102011 007 827
- DE-B3- 102010 025 909

## Description

The present invention relates to a device to be displaced through a pipe, such as a drinking water pipe in a drinking water distribution network. Such a device, also referred to as a pipe robot, is used to inspect such pipes internally, such as for example inspecting the state of the pipe wall.

DE 10 2004 029631 relates to a carriage for the centered passage of a pipe, with at least three arms arranged along the circumference for contact with the inner wall of the pipe, wherein the arms on a carriage support each pivotable about a pivot axis parallel to the longitudinal axis of the carriage and are motion-coupled to each other for synchronous pivoting and that a drive for pivoting the arms is provided, wherein the arms are coupled to one another for movement by gears and the arms each have a gear section which meshes with a drive gear of the drive via an intermediate gear. The intermediate gear is mounted in a longitudinally displaceable manner and is biased by a spring into meshing engagement with the drive gear and gear section.

DE 10 2005 035826 relates to a vehicle, i.e. an equipment carrier that can be inserted into the interior of a pipeline, with a mobile base body on which several support arms provided with rollers are distributed over its circumference in a central area and are motorized pivotable in the radial direction, of which first support arms are directed towards one axial end of the equipment carrier and second support arms towards the other, with at least part of the rollers being driven, wherein the first support arms and the second support arms can be pivoted separately from one another, and one of the first and second support arms at a common joint on the base body are articulated. The first and second support arms are each pivotable by means of at least one pressurizable piston-cylinder arrangement.

DE 10 2011 007827 relates to a travelling device for an apparatus for rehabilitating pipelines, with an adjustable undercarriage, comprising a plurality of wheels, and with a support device to which the undercarriage is fastened, and a plurality of wheel sets, each wheel set comprising at least two wheels, and wherein the wheels of a wheel set are rotatably mounted on a wheel holding element, wherein on a first end of the wheel holding element a first wheel and on a second end of the wheel holding element a second wheel are rotatably mounted, wherein the wheel holding element is adjustably connected to the support device by means of braces embodied as scissor linkage.

It is an object of the present invention to provide a device of compact construction which may be used for displacement in pipes of different diameters. It is an object of the invention to provide a device of an efficient and reliable design.

One or more of said objects is achieved by the device as defined in claim 1 to be displaced through a pipe, such as a drinking water pipe in a drinking water distribution network. The device according to the invention comprises a frame which defines an axial direction, in use parallel to a direction of longitudinal extension of the pipe. In addition, the device has a pivot arm which is connected to the frame so as to be pivotable and which comprises a contact element, such as a wheel, at a free end, which contact element is configured to, in a state of use, be in contact with an inner pipe wall. This way, the device can be positioned with respect to the pipe inside the pipe. The device also has an operating device which is connected to the frame and configured to, in use, move the pivot arm from a folded position of the pivot arm, in a radial direction, away from the frame, in order to bring the contact element into contact with the inner pipe wall,
wherein, for the benefit of the pivot arm, the operating device has a follower which is displaceable with respect to the frame and connected to the frame, and wherein the pivot arm has a cam track for cooperating with the follower, wherein the follower, in use, applies a force to the cam track on account of its displacement for the purpose of moving the pivot arm away from the frame.

Producing the radial pivoting motion of the pivot arm by means of the cam track and the follower is a very efficient, reliable way of operating the pivot arm. In particular, such a cam track can easily be modified to the desired properties of the device, such as with respect to transmission of force between follower and cam track and the associated radial force which is exerted on the pipe wall in use. It is relevant to keep such radial forces controllable, even when the device is used in pipes having different diameters, since, for example, an excessively high radial force may result in damage to the pipe wall while an excessively low radial force may result in slip between the contact element and the pipe wall in an embodiment in which the contact element is driven in order to displace the device through the pipe, that is to say move it forwards and, optionally, also slow it down.

In one embodiment, the device has at least two, preferably three, pivot arms which are each connected to the frame so as to be pivotable and which each comprise a contact element, such as a wheel, at a free end, which contact elements are configured to, in a state of use, be in contact with an inner pipe wall. The operating device is then configured to, in use, move each of the at least two pivot arms from a folded position of each of the at least two pivot arms, in a radial direction, away from the frame, in order to bring the respective contact elements into contact with the inner pipe wall, wherein, for the benefit of each of the at least two pivot arms, the operating device has a follower which is displaceable with respect to the frame and connected to the frame, and wherein each of the pivot arms has a cam track for cooperating with a respective follower, wherein each follower, in use, applies a force to the associated cam track on account of its displacement for the purpose of moving the pivot arm away from the frame.

By means of the at least two, preferably three pivot arms, the device may be efficiently positioned, viewed radially, centrally or, for example, at a predetermined decentral position in the pipe. Being able to position the device in a desired central or decentral position in the pipe is advantageous, for example when passing an obstruction in a pipe, such as a butterfly valve in the center of the pipe, or when the device is situated preferably close to or against the pipe wall for the purpose of, for example, data transfer with a system outside the pipe.

The number of at least two pivot arms preferably involves at most twenty, more preferably at most six, pivot arms.

In one embodiment, the cam track has a curved shape. The effect of such a curved shape of the cam track is that it makes it possible to change said transmission of force in a very simple manner as a function of the folded-out position of the pivot arm in order thus to keep a ratio between a force exerted on the cam track by the follower and the resulting radial force on the pipe wall upon contact between the contact element and the pipe wall at a desired value or within a desired range for pipes of different diameter.

In one embodiment, the curved shape comprises a convexly curved shape, viewed with respect to the follower. Such a convexly curved shape produces a more favorable ratio between said force exerted by the follower and the radial force, in particular in pivot positions close to the folded position and close to and in a maximum folded-out position.

In one embodiment, the pivot arm has a first deployment range and a second, further deployment range, wherein the pivot arm is further away from the frame in the second, further deployment range than in the first deployment range. In one embodiment, the cam track is convexly curved in the portion thereof along which the follower passes if the pivot arm is in the first deployment range. In one embodiment, the cam track is convexly curved in the portion thereof along which the follower passes if the pivot arm is in the second deployment range. The follower exerts a normal force on the cam track. In one embodiment, a curvature of the cam track is such that the vector of the normal force which is exerted on the cam track by the follower is directed more in an axial direction in the first deployment range than in the second deployment range. Then, in a situation where the axial component of the vector of the normal force is equal in size in both ranges, the radial component of said vector is therefore smaller in the first deployment range than in the second deployment range. Such a curvature of the cam track in the first and second deployment range produces a particularly favorable ratio between said normal force exerted by the follower and the resulting radial force in said deployment ranges. Due to the fact that the normal force vector in the first deployment range is directed more in the axial direction than in the second deployment range, in the first deployment range, the radial force exerted on the pipe wall by the contact element can be reduced, while it can be increased in the second deployment range. In one embodiment, an angle between the normal force vector and the axial direction is smaller than 60 degrees in the first range and larger than 60 degrees in the second range. In one embodiment, an angle between the normal force vector and the axial direction is smaller than 50 degrees in the first range and larger than 50 degrees in the second range.

In one embodiment, a curvature of the cam track in the first deployment range is such that the direction of the vector of the normal force which is exerted on the cam track by the follower points more in the axial direction than in the radial direction. In other words, the axial component of the normal force vector is then greater than the radial component of the normal force vector. In one embodiment, a curvature of the cam track in the second deployment range is such that the direction of the vector of the normal force which is exerted on the cam track by the follower points more in the radial direction than in the axial direction. Such curvatures of the cam track in the first and second deployment range, adjustable for each deployment range by the design of the cam track, provide a particularly favorable ratio between said force exerted on the cam track by the follower and the radial force exerted on the pipe wall by the contact element in said deployment ranges.

Due to the above-described curved shape of the cam track, it is possible to efficiently cause, to a large degree independently from the folded-out position, a constant force of the follower in the axial direction on the cam track to produce a radial force of the contact element on the wall in a predetermined range which preferably has a substantially constant profile as a function of the folded-out position. This means that the ratio between said axial force (that is to say the magnitude of said axial component of the normal force vector) and the radial force which is exerted on the pipe wall by the contact element can be kept relatively constant.

In one embodiment, in which the device has at least two pivot arms, the followers which are connected to the frame so as to be displaceable with respect to the frame for the benefit of each of the at least two pivot arms are preferably provided on a joint base body, which base body is configured to be displaceable in the axial direction with respect to the frame. This makes it possible to efficiently fold the pivot arms in and out simultaneously. Alternatively, the device may be configured to displace the pivot arms independently from each other, such as by connecting each of the respective followers which are associated with the at least two pivot arms to the frame so as to be displaceable via a separate base body.

It is advantageous if the follower or followers of said base body are displaceable by means of a screw spindle or each via a separate screw spindle, which screw spindle(s) is/are connected to the frame and extend(s) in the axial direction and is/are rotatably drivable by means of a drive element, such as an electric motor. In such a way, the folding in and out can take place in a highly controlled manner.

According to the invention, the pivot arm has a first arm part whose first end is connected to the frame so as to be pivotable about a first pivot axis, and has a second arm part whose first end is connected to a second end of the first arm part which is situated opposite the first end of the first arm part, so as to be pivotable about a second pivot axis, and has the contact element on a second end which is situated opposite the first end of the second arm part, wherein a pivoting angle between the first and second arm part is determined by a pivoting angle between the first arm part and the frame.

According to the invention, the pivot arm also has an operating arm which is connected to the frame so as to be pivotable about a third pivot axis and, at an opposite end thereof, is connected to the second arm part so as to be pivotable about a fourth pivot axis which is situated at a greater distance from the contact element than the second pivot axis. The first arm part and the operating arm can thus form a parallelogram-like structure and the folding in and out of the first and second arm part may be brought about by swinging the operating arm in and out. Alternatively, the cam track may form part of or at least be attached to the first arm part.

In an alternative embodiment of the device, the pivot arm comprises, or in an embodiment with several pivot arms, each pivot arm comprises, one single arm part which is connected to the frame so as to be pivotable and which has the contact element at a free end thereof. In this case, the cam track may form part of or at least be connected to this one arm part.

In one embodiment, the device furthermore has a drive device for, in use, driving the contact element for displacement through the pipe. In this case, it is advantageous if the drive device has an electric motor provided in the second arm part for driving the contact element provided on that arm part in a rotating manner. In this way, the device can be displaced efficiently through the pipe.

In one embodiment, the follower is a cam roller.

In one embodiment, the pivot arm is provided on the frame resiliently biased in a radial direction, away from the frame. In this case, the device preferably has a said screw spindle, wherein the screw spindle is preferably provided resiliently on the frame. The screw spindle is preferably provided on the frame so as to be axially resilient.

One effect of the above biasing is that, if the pivot arm, or in an embodiment with at least two pivot arms, one or more pivot arms, in use, for example pass a ridge or bump on the inner pipe wall, the pivot arm can move in the direction of the frame counter to the spring force and can thus pass the ridge or bump without this having adverse consequences for the structure of the device or for displacing the device through the pipe.

In one embodiment, the device furthermore has inspection means for inspecting the inner pipe wall.

The present invention furthermore relates to a combination of at least three above-described devices according to the present invention, wherein the at least three devices are mutually connected to each other in order thus to form a train or string comprising the devices for joint displacement through the pipe. In this case, the at least three devices may be successively connected to each other directly, or indirectly, such as via intermediate modules or parts of the combination. In this case, it is advantageous if at least one device of the combination has an additional frame, via which additional frame this device is connected to, or at least connectable to, a portion of the combination directly upstream and/or directly downstream thereto, wherein the frame of the device is provided so as to be guided in the axial direction with respect to the additional frame and resiliently connected to the additional frame. In this case, if one of the devices of the combination hits, for example, a ridge or bump or bend in the pipe, the ridge, bump or bend can be efficiently detected, such as for example by a sensor which is operational between the frame and the additional frame. Consequently, the pivot arm, or one of more pivot arms of one or more of the devices of the combination can be (partly) folded in so as to pass said ridge or another bump or bend in a more operationally reliable way.

In a general sense, the present invention relates to a device to be displaced through a pipe, such as a drinking water pipe, comprising a frame, a pivot arm which is connected to the frame so as to be pivotable and which comprises a contact element at a free end, an operating device for moving the pivot arm from a folded position of the pivot arm, in a radial direction, away from the frame, in order to bring the contact element into contact with the inner pipe wall, wherein, for the benefit of the pivot arm, the operating device has a follower which is displaceable with respect to the frame and connected to the frame, and wherein the pivot arm has a cam track for cooperating with the follower, wherein the follower applies a force to the cam track on account of its displacement for the purpose of moving the pivot arm away from the frame.

The present invention will be described below by means of the description of preferred embodiments of devices according to the present invention, with reference to the following figures, in which:
Fig. 1 shows a longitudinal section of a preferred embodiment of a device according to the present invention;
Fig. 2 shows a longitudinal section of the device from Fig. 1 in another operating state;
Fig. 3 shows a longitudinal section of the device from Fig. 1 in yet another operating state;
Fig. 4 shows a front view of the device from Fig. 2;
Fig. 5 shows a three-dimensional view from a front side of the device from Fig. 2;
Fig. 6 shows a three-dimensional view from a rear side of the device from Fig. 2;
Fig. 7 shows a highly diagrammatic and abstracted representation of the device from Fig. 2;
Fig. 8 shows a highly diagrammatic and abstracted representation of a further preferred embodiment of a device according to the present invention;
Fig. 9 shows the cross section from Fig. 2; and
Fig. 10 shows a graph of the force ratio in a preferred embodiment of a device according to the present invention.

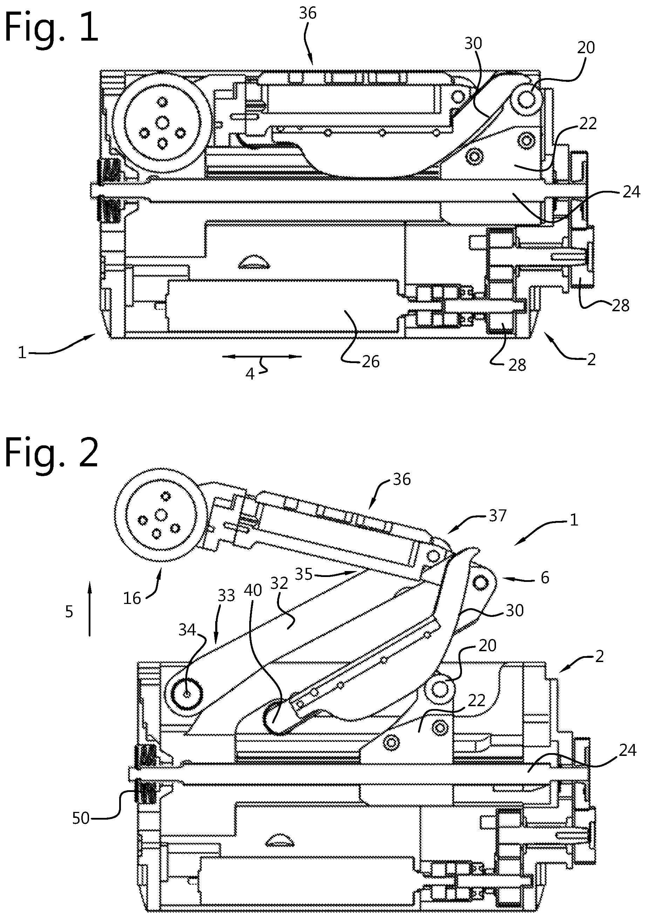

Fig. 1 shows a device 1 which is configured to be displaced through a pipe, such as a drinking water pipe in a drinking water distribution network. The device 1 is also denoted as a pipe robot. Said drinking water pipes typically have an (inner) diameter in the range of approximately 90 - 350 mm and therefore the device 1 according to the present invention is in particular configured to be displaced through pipes having an (inner) diameter in said range.

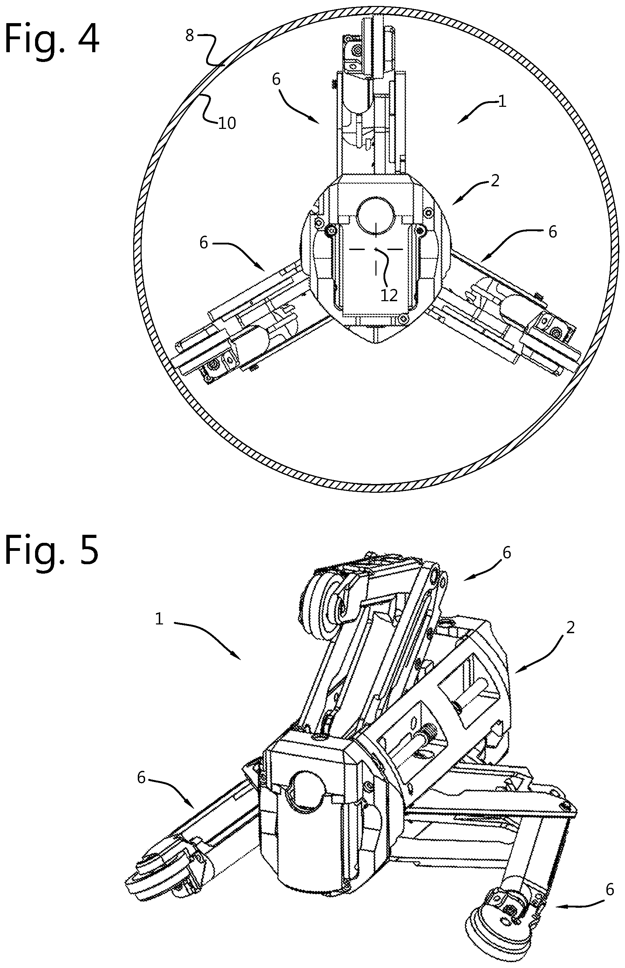

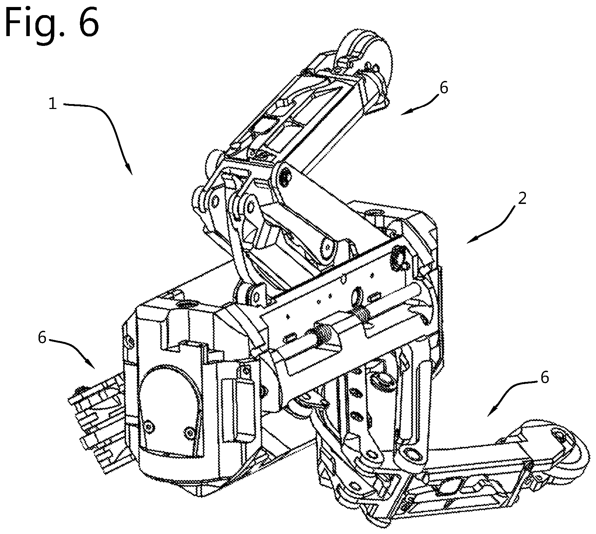

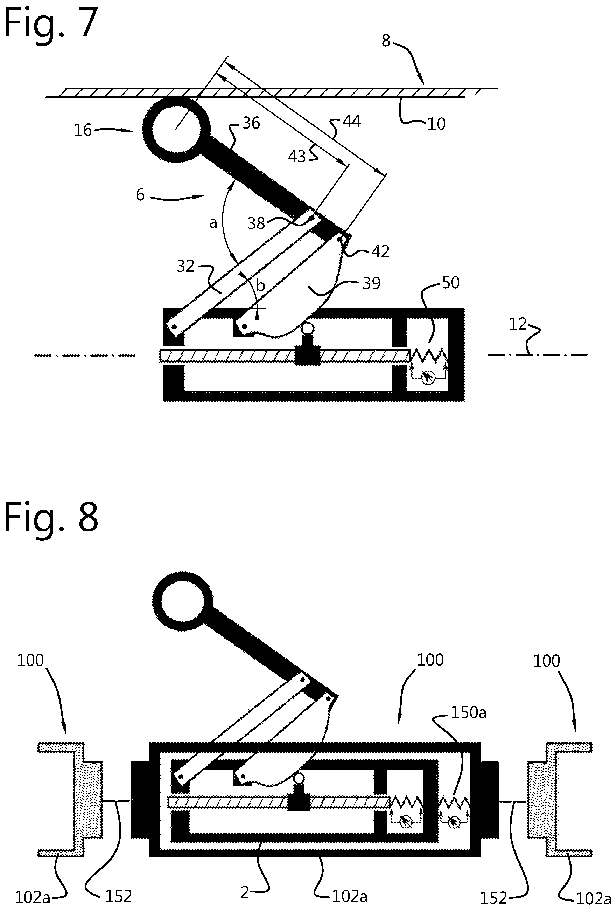

The device 1 has a frame 2 which defines an axial direction 4 of the device 1. When using the device in a pipe, the axial direction is parallel to a direction of longitudinal extension, that is to say axial direction of the pipe. In addition, the device 1 has three pivot arms 6 which are each connected to the frame 2 so as to be pivotable. See also Figs. 4 - 6. At its free end 14, each pivot arm 6 has a contact element 16, such as a wheel in the present example. The contact elements 16 are configured to, in a state of use, be in contact with an inner wall 10 of the pipe 8. By means of the pivot arms, the device may be positioned centrally in the pipe 8, viewed radially. Incidentally, in Fig. 7, the pipe 8 is drawn diagrammatically, with an axis 12 of the pipe being indicated by means of a dash-dot line. In this case, Fig. 7 shows a greatly simplified illustration of the device 1 for the purpose of explaining the structure of the device in greater detail.

Incidentally, within the context of the invention it is conceivable for the device to have one single pivot arm. It is then possible to fit a contact element, or several contact elements, such as an optionally driven wheel, directly to the frame on an opposite side of the frame.

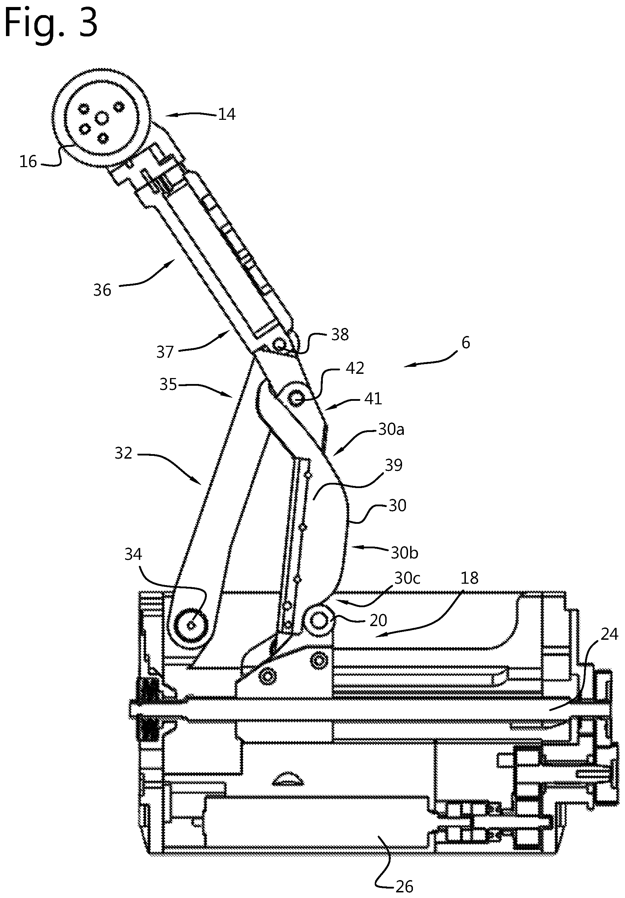

The device 1 furthermore has an operating device 18 (indicated in Fig. 3) which is connected to the frame 2 and is configured to, in use, move each of the pivot arms 6 from a folded position (Fig. 1) of each of the pivot arms 6, in a radial direction, away from the frame (in the direction of arrow 5 in Fig. 2, at least for the pivot arm illustrated in Fig. 2), in order to bring the respective contact elements 16 into contact with the inner pipe wall. For the benefit of each pivot arm, the operating device 18 has a follower 20 which is displaceable with respect to the frame 2 and connected to the frame. The followers 20 are configured as cam rollers. The three followers 20 are provided on a joint base body 22 which is axially displaceable with respect to the frame 2 by means of a screw spindle 24. The screw spindle 24 is connected to the frame 2 and extends in the axial direction 4 and is rotatably drivable by means of a drive element, such as an electric motor 26, via a gear wheel transmission 28.

Each pivot arm 6 has a cam track 30 for cooperating with a respective associated follower 20. In this case, the follower 20 exerts a force on the associated cam track 30 due to its axial displacement by driving rotation of the spindle 24 for the benefit of said radial movement of the pivot arm 6 away from the frame 2. In this case, Fig. 1 shows a folded position. As can be seen, the follower 20 is situated on the far right in the view from Fig. 1, at a start of the cam track 30. Fig. 2 shows a position of the pivot arm 6 in which it is partly folded out. As can be seen, the follower 20 has moved to the left on account of the rotation of the spindle 24 and the follower here follows the cam track 30, as a result of which the pivot arm 6 moves radially away from the frame. In this case, Fig. 3 shows an extreme folded-out position. As can be seen, the follower 20 has reached the end of the cam track 30 and the pivot arm cannot be folded out any further.

In one embodiment, the device according to the invention may in addition have a counter-follower (not shown in any more detail in the figures) which cooperates with the follower, is configured to follow a further cam track and which is adapted to the cam track and is also provided on the pivot arm. In this case, the counter-follower with further cam track are configured in such a way that the follower cannot come off the cam track during use. In other words, even when the pivot arm is being folded in or when an external force is exerted on the pivot arm in the radial direction, away from the frame, the cam track remains in contact with the follower.

Each pivot arm 6 has a first arm part 32 whose first end 33 is connected to the frame 2 so as to be pivotable about a first pivot axis 34. Furthermore, each pivot arm 6 has a second arm part 36 whose first end 37 is connected to a second end 35 of the first arm part 32, which is situated opposite the first end 35, so as to be pivotable about a second pivot axis 38, and has the contact element 16 at a second end which is situated opposite the first end of the second arm part and determines said free end 14 of the pivot arm 6. The pivot arm 6 furthermore has an operating arm 39 which is connected to the frame 2 so as to be pivotable about a third pivot axis 40 and, at an opposite end 41 thereof, is connected to the second arm part 36 so as to be pivotable about a fourth pivot axis 42, which is situated at a greater distance 44 from the contact element 16 than the second pivot axis 38 (distance 43; Fig. 7). This means that the operating arm 39, viewed from the contact element 16, is connected to the second pivot arm beyond the connection between the first and second pivot arm, as is shown in particular in Fig. 7. Thus, a pivoting angle a between the first 32 and second 36 arm part is determined by a pivoting angle b between the first arm part 32 and the frame 2. At least in the example according to the figures, the cam track 30 is provided on the operating arm 39.

The device 1 furthermore has a drive device for driving each of the contact elements 16 for displacing the device in the pipe. The drive device comprises a respective electric motor provided in each second arm part 36 for driving the contact element 16 provided on the respective second arm part 36 in a rotating manner.

As the figures show, the shape of the cam tracks 30 is curved, more specifically substantially convexly curved with respect to the associated follower 20. A first deployment range can be recognized in which the pivot arm moves between the folded position (Fig. 1) and an intermediate position (Fig. 2). In this case, the follower 20 has rolled along a first convexly curved portion 30a of the cam track 30. See also Fig. 3. There then follows a portion 30b in which the shape of the cam track is flat to only slightly curved. By contrast, the shape of the last portion 30c of the cam track is more convexly curved. The follower is displaced along this portion 30c in a second, further deployment range of the pivot arm 6. As becomes evident when comparing Figs. 1, 2 and 3, the pivot arm in the second, further deployment range is at a greater distance from the frame than in the first deployment range. The cam track is convexly curved both in the first deployment range (i.e. portion 30a) and in the second deployment range (portion 30c). The cam track is curved in such a way that the vector of the normal force which is exerted on the cam track by the follower points more in the axial direction in the first deployment range than in the second deployment range. This specifically designed convexly curved shape of the cam track 30 results in a significantly more advantageous ratio between the force exerted by the cam on the cam track and the resulting radial force which the contact element exerts on the inner pipe wall.

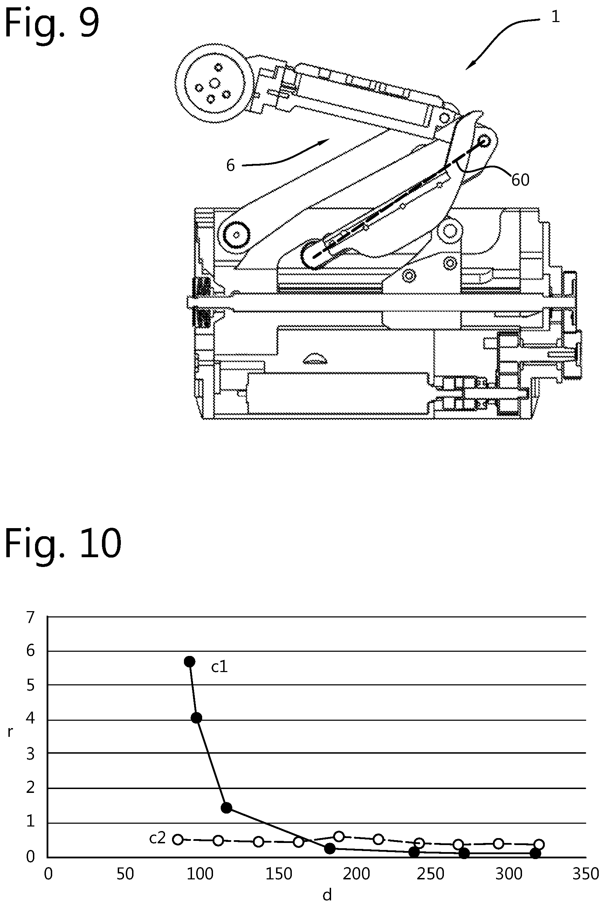

Reference is made to Figs. 9 and 10 for further clarification of the effect of the curved cam track 30. For comparison, a straight or non-curved cam track is illustrated by the dash-dot line 60 in Fig. 9. If the cam track would have this non-curved profile, this would result in the curve c1 shown in the graph from Fig. 10. The horizontal axis of the graph indicates a span or diameter d. This may be seen as the circumscribing circle around the three contact elements which is thus equal to the diameter of the inner pipe wall if the contact elements are in contact with the inner wall during use. What is shown is the profile for pipe diameters between approximately 90 and 320 mm. The vertical indicates the ratio r between said force, or at least the axial component of the vector of the normal force which the follower exerts on the cam track, and the resulting radially directed force which is exerted on the inner wall by the contact element. The downward curve c1 is associated with said straight cam track. As the curve c1 shows, the ratio is large at relatively small diameters. This means that, with small pipe diameters, a small axial component of the force of the cam on the cam track already results in a large radial force of the contact element on the pipe wall, which is less advantageous from the point of view of control of the device. The same conversely applies for relatively large diameters. As is shown, the ratio for such diameters the curve c1 in Fig. 10 is small, which means that a relatively large force has to be exerted by the cam on the cam track while the resulting radial force of the contact element on the pipe wall is relatively small. With such a straight cam track, this therefore results in relatively greater demands on a drive motor or, for example, said spindle and a relatively greater risk of slip due to a possibly excessively low radial force at large pipe diameters.

By contrast, the relatively flat curve c2 in Fig. 10 shows the profile of said force ratio at the curved cam track 30 of the device 1. It is clear that both in the range of relatively small pipe diameter (on the left in the figure) and also in the range of relatively large pipe diameter (on the right in the figure), the resulting radial force of the contact element on the pipe wall remains at approximately the same ratio with respect to the force exerted on the cam track by the cam. This reduces the demands on the power of said drive motor and makes control easier and more reliable.

For the purpose of further increasing the strength and operational reliability of the displacement of the device through the pipe, the three pivot arms 6 are provided on the frame resiliently biased in a radial direction away from the frame 2. To this end, the screw spindle 24 is resiliently provided on the frame, namely by means of the cup springs 50 (see Figs. 2 and 7). These springs 50 are provided between the frame and the screw spindle in such a way that the screw spindle is axially biased. As a result thereof, the pivot arms 6 are biased radially away from the frame due to this spring load. If one or more pivot arms, in use, pass, for example a ridge or bump on the inner pipe wall, the pivot arms can move in the direction of the frame counter to the spring force and thus pass the ridge or bump without this having any negative consequences for the structure of the device or for the displacement of the device through the pipe.

The device may furthermore comprise inspection means for inspecting the inner pipe wall.

Fig. 8 shows a further preferred embodiment of a device according to the invention. With regard to construction and operation, this device 100 is identical to the device 1, but has an additional frame 102a. In this case, the frame 2 of the device 100 is provided so as to be guided in the axial direction with respect to the additional frame 102a and resiliently connected to the additional frame 102a via coil spring 150a. As an alternative to one or more coil springs, it is also possible, for example, to use one (or more) cup or leaf springs or as a further alternative, for example pneumatically. In this case, the device 100 forms part of a combination of, at least in the present example, three such devices 100 which are provided in succession and which together, as a string or train, move through the pipe. The combination may also comprise further modules, optionally between two devices 100, such as for the purpose of performing measurements in the pipe. The devices 100 are connected to each other via the respective additional frames 102a via flexible coupling means 152, directly or indirectly, such as for example via a said module of the combination.

In this case, if one of the devices 100 of the combination in this case hits, for example, a ridge or a bump or bend in the pipe, the entire part of the device which is guided in the additional frame 102a, i.e. in fact the device 1 of that one device 100, is able to move axially, which contributes to the detection of such a ridge or bend. As a result thereof, for example one or more pivot arms of one or more of the devices of the combination can be (partly) folded in for the purpose of passing said ridge or a different bump or bend in a more operationally reliable way.

## Claims

1. A device (1) to be displaced through a pipe, such as a drinking water pipe in a drinking water distribution network, the device comprising:
- a frame (2) which defines an axial direction, in use parallel to a direction of longitudinal extension of the pipe,
- a pivot arm (6) which is connected to the frame so as to be pivotable and which comprises a contact element (16), such as a wheel, at a free end (14), which contact element is configured to, in a state of use, be in contact with an inner pipe wall,
- an operating device (18) which is connected to the frame and configured to, in use, move the pivot arm from a folded position of the pivot arm, in a radial direction, away from the frame, in order to bring the contact element into contact with the inner pipe wall,
wherein, for the benefit of the pivot arm, the operating device has a follower (20) which is displaceable with respect to the frame and connected to the frame, and wherein the pivot arm has a cam track (30) for cooperating with the follower, wherein the follower, in use, applies a force to the cam track on account of its displacement for the purpose of moving the pivot arm away from the frame, **characterized in that** the pivot arm has a first arm part (32) whose first end (33) is connected to the frame so as to be pivotable about a first pivot axis (34), and has a second arm part (36) whose first end (37) is connected to a second end (35) of the first arm part which is situated opposite the first end of the first arm part, so as to be pivotable about a second pivot axis (38), and has the contact element on a second end which is situated opposite the first end of the second arm part, wherein a pivoting angle between the first and second arm part is determined by a pivoting angle between the first arm part and the frame, wherein the pivot arm has an operating arm (39) which is connected to the frame so as to be pivotable about a third pivot axis and, at an opposite end (41) thereof, is connected to the second arm part so as to be pivotable about a fourth pivot axis (42) which is situated at a greater distance (44) from the contact element than the second pivot axis.

2. The device as claimed in claim 1, wherein the cam track has a curved shape.

3. The device as claimed in claim 2, wherein the curved shape comprises a convexly curved shape (30a), viewed with respect to the follower.

4. The device as claimed in claim 2 or 3, wherein the pivot arm has a first deployment range and a second, further deployment range, wherein the pivot arm is further away from the frame in the second, further deployment range than in the first deployment range,
wherein a curvature of the cam track is such that the vector of the normal force which is exerted on the cam track by the follower is directed more in an axial direction in the first deployment range than in the second deployment range.

5. The device as claimed in one of the preceding claims, comprising at least two, preferably three, such pivot arms which are each connected to the frame so as to be pivotable.

6. The device as claimed in claim 5, wherein the followers which are connected to the frame so as to be displaceable with respect to the frame for the benefit of each of the at least two pivot arms are provided on a joint base body, which base body is configured to be displaceable in the axial direction with respect to the frame.

7. The device as claimed in the preceding claims, wherein the follower is displaceable by means of a screw spindle (24), which screw spindle is connected to the frame and extends in the axial direction and is rotatably drivable by means of a drive element, such as an electric motor.

8. The device as claimed in one of the preceding claims, wherein the device furthermore has a drive device for, in use, driving the contact element for displacement through the pipe.

9. The device as claimed in claim 8, wherein the drive device has an electric motor which is provided in the second arm part for driving the contact element provided on that second arm part in a rotating manner.

10. The device as claimed in one of the preceding claims, wherein the follower is a cam roller.

11. The device as claimed in one of the preceding claims, wherein the pivot arm is provided on the frame resiliently biased in a radial direction, away from the frame, preferably wherein the device is as claimed in claim 7 wherein the screw spindle is provided resiliently on the frame.

12. The device as claimed in one of the preceding claims, furthermore comprising inspection means for inspecting the inner pipe wall.

13. A combination comprising at least three devices as claimed in one of the preceding claims, wherein the at least three devices are mutually connected to each other in order thus to form a train or string comprising said devices for joint displacement through the pipe.
wherein at least one device of the combination has an additional frame, via which additional frame this device is connected to, or at least connectable to, a portion of the combination directly upstream and/or directly downstream thereto, wherein the frame of the device is provided so as to be guided in the axial direction with respect to the additional frame and resiliently connected to the additional frame.

## Patentansprüche

1. Vorrichtung (1) zum Verschieben durch ein Rohr, zum Beispiel ein Trinkwasserrohr in einem Trinkwassernetz, wobei die Vorrichtung Folgendes umfasst:
- einen Rahmen (2), der eine Axialrichtung definiert, die bei der Verwendung parallel zu einer Längsausdehnungsrichtung des Rohrs verläuft,
- einen Schwenkarm (6), der mit dem Rahmen schwenkbar verbunden ist und der ein Kontaktelement (16), zum Beispiel ein Rad, an einem freien Ende (14) umfasst, wobei das Kontaktelement dazu ausgelegt ist, im Verwendungszustand eine Rohrinnenwand zu berühren,
- eine Betätigungsvorrichtung (18), die mit dem Rahmen verbunden und dazu ausgelegt ist, bei der Verwendung den Schwenkarm von einer zusammengeklappten Position des Schwenkarms in Radialrichtung vom Rahmen weg zu bewegen, um das Kontaktelement mit der Rohrinnenwand in Verbindung zu bringen,
wobei, zugunsten des Schwenkarms, die Betätigungsvorrichtung einen Nockenstößel (20) aufweist, der in Bezug zum Rahmen verschiebbar und mit dem Rahmen verbunden ist, und wobei der Schwenkarm eine Nockenlaufbahn (30) zum Zusammenwirken mit dem Nockenstößel aufweist, wobei der Nockenstößel bei der Verwendung aufgrund dessen Verschiebung zum Zwecke des Bewegens des Schwenkarms vom Rahmen weg eine Kraft auf die Nockenlaufbahn aufbringt, **dadurch gekennzeichnet, dass** der Schwenkarm einen ersten Armteil (32) aufweist, dessen erstes Ende (33) mit dem Rahmen verbunden ist, um um eine erste Schwenkachse (34) schwenkbar zu sein, und einen zweiten Armteil (36) aufweist, dessen erstes Ende (37) mit einem zweiten Ende (35) des ersten Armteils verbunden ist, das dem ersten Ende des ersten Armteils entgegengesetzt angeordnet ist, um um eine zweite Schwenkachse (38) schwenkbar zu sein, und das Kontaktelement an einem dem ersten Ende des zweiten Armteils entgegengesetzt angeordneten zweiten Ende aufweist, wobei ein Schwenkwinkel zwischen dem ersten und zweiten Armteil durch einen Schwenkwinkel zwischen dem ersten Armteil und dem Rahmen bestimmt wird, wobei der Schwenkarm einen Betätigungsarm (39) aufweist, der mit dem Rahmen verbunden ist, um um eine dritte Schwenkachse schwenkbar zu sein, und an dessen entgegengesetzten Ende (41) mit dem zweiten Armteil verbunden ist, um um eine vierte Schwenkachse (42) schwenkbar zu sein, die in einer größeren Entfernung (44) vom Kontaktelement angeordnet ist als die zweite Schwenkachse.

2. Vorrichtung nach Anspruch 1, wobei die Nockenlaufbahn eine gekrümmte Form aufweist.

3. Vorrichtung nach Anspruch 2, wobei die gekrümmte Form in Bezug zum Nockenstößel betrachtet eine konvex gekrümmte Form (30a) umfasst.

4. Vorrichtung nach Anspruch 2 oder 3, wobei der Schwenkarm einen ersten Einsatzbereich und einen zweiten, weiteren Einsatzbereich aufweist, wobei der Schwenkarm in dem zweiten, weiteren Einsatzbereich vom Rahmen weiter entfernt ist als im ersten Einsatzbereich,
wobei eine Krümmung der Nockenlaufbahn dergestalt ist, dass der Vektor der von dem Nockenstößel auf die Nockenlaufbahn aufgebrachten Normalkraft im ersten Einsatzbereich mehr in Axialrichtung gerichtet ist als im zweiten Einsatzbereich.

5. Vorrichtung nach einem der vorstehenden Ansprüche, umfassend mindestens zwei, vorzugsweise drei derartige Schwenkarme, die jeweils mit dem Rahmen schwenkbar verbunden sind.

6. Vorrichtung nach Anspruch 5, wobei die Nockenstößel, die mit dem Rahmen verbunden sind, um zugunsten jedes der mindestens zwei Schwenkarme in Bezug zum Rahmen verschiebbar zu sein, auf einem gemeinsamen Basiskörper vorgesehen sind, wobei der Basiskörper dazu ausgelegt ist, in Bezug zum Rahmen in Axialrichtung verschiebbar zu sein.

7. Vorrichtung nach einem der vorstehenden Ansprüche, wobei der Nockenstößel mittels einer Schraubenspindel (24) verschiebbar ist, wobei die Schraubenspindel mit dem Rahmen verbunden ist und sich in Axialrichtung erstreckt und mittels eines Antriebselements, zum Beispiel eines Elektromotors, drehend antreibbar ist.

8. Vorrichtung nach einem der vorstehenden Ansprüche, wobei die Vorrichtung ferner eine Antriebsvorrichtung zum während der Verwendung Antreiben des Kontaktelements zum Verschieben durch das Rohr aufweist.

9. Vorrichtung nach Anspruch 8, wobei die Antriebsvorrichtung einen Elektromotor aufweist, der zum drehenden Antreiben des am zweiten Armteil vorgesehenen Kontaktelements in dem zweiten Armteil vorgesehen ist.

10. Vorrichtung nach einem der vorstehenden Ansprüche, wobei der Nockenstößel eine Nockenrolle ist.

11. Vorrichtung nach einem der vorstehenden Ansprüche, wobei der Schwenkarm in eine Radialrichtung vom Rahmen weg elastisch vorgespannt am Rahmen vorgesehen ist, vorzugsweise wobei die Vorrichtung Anspruch 7 entspricht, wobei die Schraubenspindel am Rahmen elastisch vorgesehen ist.

12. Vorrichtung nach einem der vorstehenden Ansprüche, ferner umfassend eine Inspektionseinrichtung zum Inspizieren der Rohrinnenwand.

13. Kombination umfassend mindestens drei Vorrichtungen nach einem der vorstehenden Ansprüche, wobei die mindestens drei Vorrichtungen miteinander verbunden sind, um so einen Zug oder eine Kette aus den genannten Vorrichtungen zur gemeinsamen Verschiebung durch das Rohr zu bilden,
wobei mindestens eine Vorrichtung der Kombination einen zusätzlichen Rahmen aufweist, wobei die Vorrichtung über den zusätzlichen Rahmen mit einem direkt vorgelagerten und/oder direkt nachgelagerten Abschnitt der Kombination verbunden oder zumindest verbindbar ist, wobei der Rahmen der Vorrichtung vorgesehen ist, um in Bezug zum zusätzlichen Rahmen in Axialrichtung geführt zu werden und mit dem zusätzlichen Rahmen elastisch verbunden zu sein.

## Revendications

1. Dispositif (1) destiné à être déplacé à travers une conduite, telle qu'une conduite d'eau potable dans un réseau de distribution d'eau potable, le dispositif comprenant :
- un cadre (2) qui définit une direction axiale, en cours d'utilisation parallèle à une direction d'extension longitudinale de la conduite,
- un bras pivotant (6) qui est relié au cadre de manière à pouvoir pivoter et qui comprend un élément de contact (16), tel qu'une roue, à une extrémité libre (14), lequel élément de contact est configuré pour, dans un état d'utilisation, être en contact avec une paroi de conduite interne,
- un dispositif d'actionnement (18) qui est relié au cadre et configuré pour, en cours d'utilisation, déplacer le bras pivotant depuis une position repliée du bras pivotant, dans une direction radiale, loin du cadre, afin de mettre l'élément de contact en contact avec la paroi de conduite interne,
dans lequel, au profit du bras pivotant, le dispositif d'actionnement présente un suiveur (20) qui peut être déplacé par rapport au cadre et relié au cadre, et dans lequel le bras pivotant présente un chemin de came (30) pour coopérer avec le suiveur, dans lequel le suiveur, en cours d'utilisation, applique une force au chemin de came du fait de son déplacement dans le but d'éloigner le bras pivotant du cadre, **caractérisé en ce que** le bras pivotant présente une première partie de bras (32) dont la première extrémité (33) est reliée au cadre de manière à pouvoir pivoter autour d'un premier axe de pivotement (34), et présente une seconde partie de bras (36) dont la première extrémité (37) est reliée à une seconde extrémité (35) de la première partie de bras qui est située à l'opposé de la première extrémité de la première partie de bras, de manière à pouvoir pivoter autour d'un deuxième axe de pivotement (38), et présente l'élément de contact situé sur une seconde extrémité qui est située à l'opposé de la première extrémité de la seconde partie de bras, dans lequel un angle de pivotement entre les première et seconde parties de bras est déterminé par un angle de pivotement entre la première partie de bras et le cadre, dans lequel le bras pivotant présente un bras de commande (39) qui est relié au cadre de manière à pouvoir pivoter autour d'un troisième axe de pivotement et qui, à une extrémité opposée (41) de celui-ci, est relié à la seconde partie de bras de manière à pouvoir pivoter autour d'un quatrième axe de pivotement (42) qui est situé à une plus grande distance (44) de l'élément de contact que le deuxième axe de pivotement.

2. Dispositif tel que revendiqué dans la revendication 1, dans lequel le chemin de came présente une forme incurvée.

3. Dispositif tel que revendiqué dans la revendication 2, dans lequel la forme incurvée comprend une forme incurvée de manière convexe (30a), vue par rapport au suiveur.

4. Dispositif tel que revendiqué dans la revendication 2 ou 3, dans lequel le bras pivotant présente une première plage de déploiement et une seconde plage de déploiement supplémentaire, dans lequel le bras pivotant est plus éloigné du cadre dans la seconde plage de déploiement supplémentaire que dans la première plage de déploiement.
dans lequel une courbure du chemin de came est telle que le vecteur de la force normale qui est exercée sur le chemin de came par le suiveur est davantage orienté dans une direction axiale dans la première plage de déploiement que dans la seconde plage de déploiement.

5. Dispositif tel que revendiqué dans l'une des revendications précédentes, comprenant au moins deux, de préférence trois, de tels bras pivotants qui sont chacun reliés au cadre de manière à pouvoir pivoter.

6. Dispositif tel que revendiqué dans la revendication 5, dans lequel les suiveurs qui sont reliés au cadre de manière à pouvoir être déplacés par rapport au cadre au profit de chacun des au moins deux bras pivotants sont prévus sur un corps de base conjoint, lequel corps de base est configuré pour pouvoir être déplacé dans la direction axiale par rapport au cadre.

7. Dispositif tel que revendiqué dans les revendications précédentes, dans lequel le suiveur peut être déplacé au moyen d'une broche filetée (24), laquelle broche filetée est reliée au cadre et s'étend dans la direction axiale et peut être entraînée en rotation au moyen d'un élément d'entraînement, tel qu'un moteur électrique.

8. Dispositif tel que revendiqué dans l'une des revendications précédentes, dans lequel le dispositif présente en outre un dispositif d'entraînement pour, en cours d'utilisation, entraîner l'élément de contact en vue de son déplacement à travers la conduite.

9. Dispositif tel que revendiqué dans la revendication 8, dans lequel le dispositif d'entraînement présente un moteur électrique qui est prévu dans la seconde partie de bras pour entraîner l'élément de contact prévu sur cette seconde partie de bras de manière rotative.

10. Dispositif tel que revendiqué dans l'une des revendications précédentes, dans lequel le suiveur est un galet de came.

11. Dispositif tel que revendiqué dans l'une des revendications précédentes, dans lequel le bras pivotant est prévu sur le cadre sollicité élastiquement dans une direction radiale, loin du cadre, de préférence dans lequel le dispositif est tel que revendiqué dans la revendication 7 où la broche filetée est prévue élastiquement sur le cadre.

12. Dispositif tel que revendiqué dans l'une des revendications précédentes, comprenant en outre des moyens d'inspection pour inspecter la paroi de conduite interne.

13. Combinaison comprenant au moins trois dispositifs tel que revendiqué dans l'une des revendications précédentes, dans laquelle les au moins trois dispositifs sont reliés mutuellement entre eux afin de former un train ou une chaîne comprenant lesdits dispositifs permettant un déplacement conjoint à travers la conduite.
dans laquelle au moins un dispositif de la combinaison présente un cadre supplémentaire, par l'intermédiaire de ce cadre supplémentaire ce dispositif est relié à, ou au moins peut être relié à, une partie de la combinaison directement en amont et/ou directement en aval de celle-ci, dans laquelle le cadre du dispositif est prévu de manière à être guidé dans la direction axiale par rapport au cadre supplémentaire et relié élastiquement au cadre supplémentaire.
